# EUROPEAN PATENT APPLICATION

(11) **EP 1 607 999 A1**
(43) Date of publication of application: **21.12.2005**
(21) Application number: 04712683.4
(22) Date of filing: 19.02.2004
(51) Int. Cl.: H01J 29/32, C09K 11/84

(54) **PHOSPHOR SCREEN WITH METAL BACK AND IMAGE DISPLAY**

(30) Priority: 20.02.2003 JP 2003043306
(71) Applicant: KABUSHIKI KAISHA TOSHIBA, Tokyo 105-8001 (JP)
(72) Inventor: TABATA, Hitoshi, c/o Toshiba Corporation, Tokyo 105-8001 (JP); OYAIZU, Tsuyoshi, c/o Toshiba Corporation, Tokyo 105-8001 (JP); TSUCHIYA, Isamu, c/o Toshiba Corporation, Tokyo 105-8001 (JP); ITO, Takeo, c/o Toshiba Corporation, Tokyo 105-8001 (JP)
(74) Representative: HOFFMANN EITLE
(86) International application number: PCT/JP2004/001852
(87) International publication number: WO 2004/075239

(57) **Abstract**

A metal back-attached phosphor screen includes a light absorption layer (2) and a phosphor layer (3) on an inner surface of a face plate (1) respectively, and a metal back layer (5) formed on the phosphor layer (3). The light absorption layer (2) contains an oxygen carrier prepared by adding a reducing metal to a metal oxide. A particle size of the oxygen carrier can be set to be 1 to 10 µm. Besides, a phosphor material in which an activator such as Eu is added to a phosphor host material including oxygen such as Y₂O₂S, can be used as the oxygen carrier. In an image display device such as an FED, it is possible to eliminate a generation and an emission of a gas from the phosphor screen, and to improve an operation life of an electron emitting source.

## Description

### Technical Field

The present invention relates to a metal back-attached phosphor screen and an image display device including the metal back-attached phosphor screen.

### Background Art

Conventionally, in an image display device such as a plasma display panel (PDP) and a field emission display (FED), a phosphor screen of a metal-back type has been used. This phosphor screen has a structure in which a metal film such as aluminum (Al) called as a metal back layer is formed on a phosphor screen including a light absorption layer and a phosphor layer formed on an inner surface of a face plate.

To form the phosphor screen having the structure described above, for example, a method described below is adopted. Namely, a thick film paste layer is formed to be the light absorption layer by a method in which a paste composition made by dispersing glass powders, black pigments, and so on in all of a vehicle, is screen printed and so on at a predetermined position on the inner surface of the face plate (for example, refer to Japanese Patent Laid-open Application No. 2002-163928).

After that, the phosphor layer is formed by a slurry method or a print method, further, a thin film composed of an organic resin such as nitrocellulose is formed on the light absorption layer and the phosphor layer by a spin method and so on, a metal film such as Al is vacuum evaporated thereon, and it is baked to remove an organic material. A method in which the phosphor screen is further heated and baked at 400°C to 500°C is performed after the metal back layer is formed as described above (for example, refer to Japanese Patent Laid-open Application No. 61-195540).

However, in the metal back-attached phosphor screen formed by the method described above, there was a problem that inside of the light absorption layer becomes in poor-oxygen atmosphere during a heating and baking processes, and therefore, organic constituents such as a resin and a dispersing agent composing the vehicle are difficult to burn, and a residue such as carbon is formed. Besides, when a film structure is too precise, a gas is included inside because there is no loophole for a burned gas even if the organic constituents are burned. As a result, an operation life of an electron emitting source (electric emission source) may be shortened, because the included gas and the above-stated residue such as carbon become generation sources, and the gas is easy to be generated from the phosphor screen in subsequent processes.

The present invention is made to solve these problems and the object thereof is to eliminate the generation and an emission of the gas from the phosphor screen and to improve the operation life of the electron emitting source in a metal back-attached phosphor screen and an image display device having the metal back-attached phosphor screen.

### Disclosure of the Invention

A first aspect of the present invention is a metal back-attached phosphor screen, comprising a light absorption layer and a phosphor layer respectively formed on an inner surface of a face plate, and a metal back layer on the phosphor layer, wherein the light absorption layer contains an oxygen carrier having a metal oxide and a reducing metal added to the metal oxide.

A second aspect of the present invention is an image display device, comprising a face plate, a rear plate disposed to face the face plate, numerous electron emitting elements formed on the rear plate, and a phosphor screen formed on the face plate in such a way as to face the rear plate, and emitting light by electron beams emitted from the electron emitting elements, wherein the phosphor screen is the aforementioned metal back-attached phosphor screen in the present invention.

In the present invention, the light absorption layer contains the oxygen carrier having a metal oxide and a reducing metal added to the metal oxide, and a flammability of an organic constituent within the light absorption layer at a low temperature region (400°C to 500°C) is improved, and therefore, the organic constituent included in the light absorption layer is easy to burn in a heating and baking processes. As a result, a residue such as carbon to be a generation or an emission source of a gas in the light absorption layer can beeliminated. The generation or emission of the gas from the phosphor screen is suppressed as described above, and thereby, an operation life of an electron emitting source is extended, and the image display device capable of displaying with high luminance and stable for a long time, can be realized.

### Brief Description of Drawings

FIG. 1 is a sectional view showing a structure of a metal back-attached phosphor screen according to a first embodiment of the present invention.
FIG. 2 is a sectional view of an FED including a metal back-attached phosphor screen according to a second embodiment of the present invention.

### Best Mode for Implementing the Invention

Next, embodiments of the present invention are described based on the drawings. Incidentally, the present invention is not limited to the following embodiments.

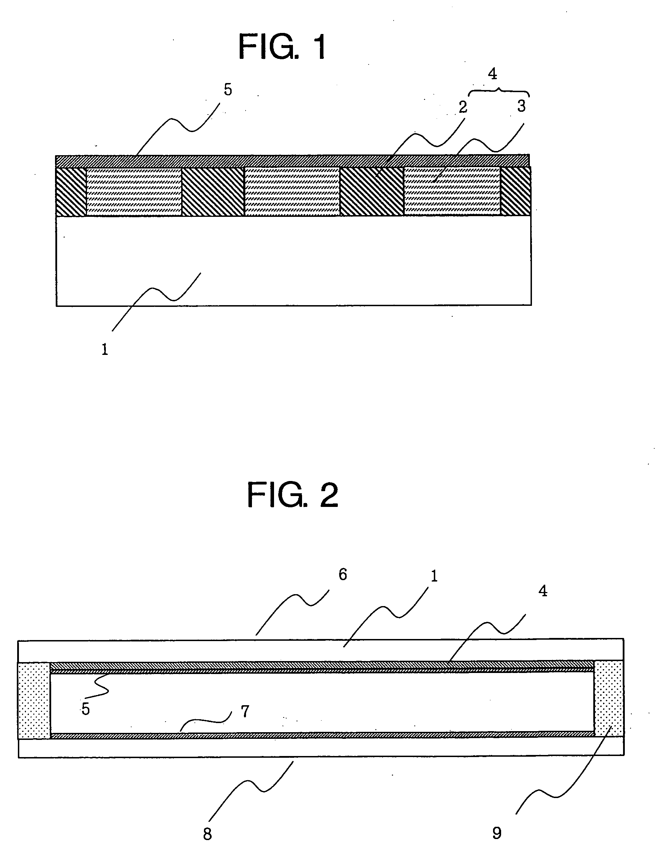

FIG. 1 is a sectional view showing a first embodiment of a metal back-attached phosphor screen according to the present invention.

In the drawing, a reference numeral 1 shows a glass substrate composing a face plate. A light absorption layer 2 with a predetermined pattern (for example, a striped pattern) is formed on an inner surface of the glass substrate 1. Besides, phosphor layers 3 with three-color of red (R), green (G), and blue (B) are provided between the patterns of the light absorption layer 2.

The light absorption layer 2 includes a black pigment such as a carbon black, and contains an oxygen carrier having a metal oxide and a reducing metal added to the metal oxide. Here, as the metal oxide, MnO₂, BaO, Fe₂O₃, Al₂O₃, TiO₂, ZrO₂, Y₂O₂S, and so on are exemplified, and one of them or two or more among them can be selected to use. As the reducing metal being added to the metal oxide described above, a sort thereof is not limited so long as it is a metal or a metal ion having a reducing characteristic for the metal oxide.

Besides, as the oxygen carrier, a phosphor material in which an activator being a rare-earth element such as europium (Eu), terbium (Tb) is added to a phosphor host material containing oxygen such as Y₂O₂S can be used. A sort of the rare-earth element being the activator is not limited in particular, and a concentration thereof is preferable to be from 0.0001 (1 × 10⁻⁴) mol% to 10 mol%.

A particle size of such oxygen carrier is preferable to be from 1 µm to 10 µm. When the particle size of the oxygen carrier is set within the above stated range, it is possible to form a gap of an appropriate size to be a loophole of a gas within the light absorption layer, and therefore, the gas generated by the burning of the organic constituent during the heating and baking processes of the phosphor screen escapes easily. Consequently, the phosphor screen without residual gas can be obtained.

To form the light absorption layer 2, a method can be adopted in which a paste composition composed of the black pigment, the above-stated oxygen carrier, a binding inorganic material, a resin component being a binder, a solvent, an additive agent, and so on, is screen printed at a predetermined position on an inner surface of the glass substrate 1, and a pattern such as a striped pattern is formed.

Here, as the binding inorganic material, a low-melting glass, a water glass, ceramics, and so on, can be cited. In particular, it is preferable to use the low-melting glass. As the low-melting glass, for example, a glass which is represented by a composition formula of (SiO₂•B₂O₃•PbO), (B₂O₃•Bi₂O₃), (SiO₂•PbO), or (B₂O₃•PbO) can be cited. Incidentally, the particle size of the binding inorganic material is preferable to be less than 5 µm. An intensity of the light absorption layer 2 is improved by adding the binding inorganic material as described above.

To form respective colors of the phosphor layers 3, a phosphor paste composed of ZnS-based, Y₂O₃-based, Y₂O₂S-based phosphors, and a resin component being the binder, the solvent, the additive agent, and so on, can be screen printed at a predetermined position. Incidentally, a forming of a pattern of the phosphor layer 3 can also be performed by a method in which a slurry including the phosphor is coated, and a patterning is formed by a photolithography method.

Further, on a phosphor screen 4 composed of the light absorption layer 2 and the phosphor layers 3 as described above, a metal back layer 5 composed of a metal film such as Al is formed.

To form the metal back layer 5, for example, a thin film composed of an organic resin such as nitrocellulose can be formed on the phosphor screen 4 by using a spin method, a metal film such as Al can be vacuum evaporated thereon, and further, it can be baked at a temperature of approximately 450°C to remove an organic matter. Besides, as shown in the following, the metal back layer 5 can also be formed by using a transfer film.

The transfer film has a structure in which a metal film such as Al and an adhesive layer are stacked sequentially on a base film with the parting agent layer (and also a protective film, if necessary) intervening therebetween. This transfer film is disposed so that the adhesive layer is in contact with the phosphor screen, and a heating and pressing are performed. As a pressing method, a stamp method, a roller method, and so on can be used. The transfer film is pressed while heated as described above, the base film is peeled off after the metal film is adhered, and thereby, the metal film is transferred to the phosphor screen. Next, the organic material is decomposed and removed by heating (baking) to the face plate to which the metal film is transferred, and the metal back layer 5 is formed.

In the metal back-attached phosphor screen according to a first embodiment constituted as described above, the light absorption layer 2 contains the oxygen carrier having a metal oxide and a reducing metal added to the metal oxide, a valence of the reducing metal within the oxygen carrier changes in a direction to which it is oxidized in itself during the baking process, and thereby, the metal oxide is reduced to release the oxygen within the metal oxide. As a result, a flammability of the organic constituent within the light absorption layer 2 is improved, and the organic constituent included in the light absorption layer 2 is easy to burn. Consequently, the residue such as carbon being a residue of the burn can be eliminated.

Besides, the particle size of the oxygen carrier is adjusted from 1 to 10 µm, and therefore, the gap to be the loophole of the gas is secured within the light absorption layer 2, as a result, the gas generated by the burn of the organic constituent is easy to escape in the heating and baking processes. Consequently, the generation of the gas from the phosphor screen is suppressed in the subsequent processes, and therefore, it is possible to obtain an image display device which has an excellent operation life of an electron emitting source, with high luminance and stable for a long time.

Next, a structure of an FED being a second embodiment of the present invention in which a metal back-attached phosphor screen is used as an anode electrode is shown in FIG. 2. In this FED, a face plate 6 having the metal back-attached phosphor screen of the above-stated first embodiment and a rear plate 8 having electron emitting elements 7 arranged in matrix pattern are disposed to face with a narrow gap of approximately 1 mm to a fewmm, and it is constituted so that a high voltage of 5 to 15 kV is applied between the face plate 6 and the rear plate 8. Incidentally, a reference numeral 9 in the drawing shows a supporting frame (side wall).

In this FED, the gap between the face plate 6 and the rear plate 8 is extremely narrow, and a dielectric breakdown caused by an electric discharge between them is easy to happen. However, the FED includes a metal back layer 5 which is rare to occur a generation and an emission of a gas, smooth without blister and soon, and therefore, the occurrence of the electric discharge is suppressed and a pressure resistance characteristic is drastically improved.

Next, a concrete example in which the present invention is applied to the FED is described.

### Example 1

A black paste having a composition stated below was screen printed on a glass substrate to form a striped pattern. Subsequently, a pattern of phosphor pastes including three-color phosphors of red (R), green (G), and blue (B) was formed between this pattern by screen printing.

| [Composition of black paste] | |
|---|---|
| Black pigment (carbon black) (particle size: 0.075 µm) | 10 wt% |
| Oxygen carrier (Y₂O₂S: Eu) (particle size: 5 µm) | 10 wt% |
| Low-melting glass material (SiO₂•B₂O₃•PbO) | 15 wt% |
| Binder resin (ethyl cellulose) | 5 wt% |
| Solvent (butyl carbitol acetate) | 60 wt% |

Next, a phosphor screen comprising a light absorption layer (thickness of 8 µm) in a striped pattern and a pattern of three-color phosphor layers (thickness of 7 µm) arranged and formed between them were formed, by heating and baking it at 450°C for two hours.

Next, an organic resin solution of which major constituent is an acrylic resin was coated on the phosphor screen, it was dried to form an organic resin layer, and thereafter, an Al film was formed thereon by a vacuum evaporation. A metal back layer was formed by heating and baking it at a temperature of 450°C for 30 minutes to decompose and remove an organic material.

Subsequently, an FED was fabricated by using a panel having a metal back-attached phosphor screen obtained as described above. Namely, an electron emitting source (electron source) in which a number of surface conduction electron emitting elements were formed on a substrate in a matrix pattern, was fixed to a rear glass substrate to be a rear plate. This rear plate and the above-stated panel (face plate) were disposed to face with the supporting frame and a spacer intervened therebetween, and they were sealed with a frit glass. A gap between the face plate and the rear plate was set to be 2 mm. Subsequently, required processes such as an evacuation, a sealing were performed and the FED was completed.

An operation life of the electron emitting source (electric source) of the FED obtained as mentioned above was examined by measuring a time until an electron emission efficiency decreased for 30%. Measured results are shown in a table 1.

### Example 2

A metal back-attached phosphor screen was produced as same as the example 1 other than a point that a pattern of a light absorption layer was formed by using a black paste having a composition stated below. Subsequently, an FED was fabricated by using a panel having this metal back-attached phosphor screen, and an operation life of an electron emitting source of the FED was measured and evaluated as same as the example 1. Measured results are shown in the table 1.

| [Composition of black paste] | |
|---|---|
| Black pigment (carbon black) (particle size: 0.075 µm) | 10 wt% |
| Oxygen carrier (Y₂O₂S: Eu) (particle size: 2 µm) | 15 wt% |
| Low-melting glass material (SiO₂•B₂O₃•PbO) | 15 wt% |
| Binder resin (ethyl cellulose) | 4 wt% |
| Solvent (butyl carbitol acetate) | 56 wt% |

### Example 3

A metal back-attached phosphor screen was produced as same as the example 1 other than a point that a pattern of a light absorption layer was formed by using a black paste having a composition stated below. Subsequently, an FED was fabricated by using a panel having this metal back-attached phosphor screen, and an operation life of an electron emitting source of the FED was measured and evaluated as same as the Example 1. Measured results are shown in the table 1.

| [Composition of black paste] | |
|---|---|
| Black pigment (carbon black) (particle size: 0.075 µm) | 10 wt% |
| Oxygen carrier (Y₂O₂S: Eu, Tb) (particle size: 5 µm) | 10 wt% |
| Low-melting glass material (SiO₂•B₂O₃•PbO) | 15 wt% |
| Binder resin (ethyl cellulose) | 5 wt% |
| Solvent (butyl carbitol acetate) | 60 wt% |

Besides, as a comparative example, a pattern of a light absorption layerwas formed by using a black paste having a composition stated below without containing an oxygen carrier. Subsequently, a metal back-attached phosphor screen was produced as same as the example 1 other than that, and an FED was fabricated by using a panel having this metal back-attached phosphor screen. An operation life of an electron emitting source of the FED obtained in the comparative example was measured and evaluated as same as the example 1. Measured results are shown in the table 1.

| [Composition of black paste] | |
|---|---|
| Black pigment (carbon black) (particle size: 0.075 µm) | 18 wt% |
| Low-melting glass material (SiO₂•B₂O₃•PbO) | 27 wt% |
| Binder resin (ethyl cellulose) | 5 wt% |
| Solvent (butyl carbitol acetate) | 50 wt% |

**[Table 1]**

| | EXAMPLE 1 | EXAMPLE 2 | EXAMPLE 3 | COMPARATIVE EXAMPLE |
|---|---|---|---|---|
| WITH OR WITHOUT OF OXYGEN CARRIER | WITH | WITH | WITH | WITHOUT |
| PARTICLE SIZE OF OXYGEN CARRIER | 5 µm | 2 µm | 5 µm | - |
| METAL OXIDE | Y₂O₂s | Y₂O₂s | Y₂O₂s | - |
| REDUCING AGENT (ACTIVATOR) | Eu | Eu | Eu, Tb | - |
| OPERATION LIFE OF ELECTRIC SOURCE (HOURS) | 30000 | 20000 | 20000 | 5000 |

As it is obvious from the results of the table 1, in the FEDs including the metal back-attached phosphor screens obtained in the example 1 to example 3, the operation lives of the electron emitting sources are drastically improved compared to the FED obtained in the comparative example.

### Industrial Applicability

As described hereinabove, according to the present invention, a light absorption layer contains an oxygen carrier having a metal oxide and a reducing metal added to the metal oxide, and thereby, a flammability of an organic constituent within the light absorption layer is improved. Accordingly, the organic constituent contained in the light absorption layer is easy to burn in heating and baking processes. As a result, a residue such as carbon to be a gas generation source can be eliminated. A generation and an emission of a gas from the phosphor screen is suppressed, and therefore, an operation life of an electron emission source is improved, and it is possible to realize an image display device with high luminance and stable for a long time.

## Claims

1. A metal back-attached phosphor screen, comprising:
a light absorption layer and a phosphor layer respectively formed on an inner surface of a face plate; and
a metal back layer on the phosphor layer,
wherein the light absorption layer contains an oxygen carrier having a metal oxide and a reducing metal added to the metal oxide.

2. The metal back-attached phosphor screen as set forth in claim 1, wherein the oxygen carrier has a particle size of 1 to 10 µm.

3. The metal back-attached phosphor screen as set forth in claim 1, wherein the oxygen carrier is the one in which an activator of a rare-earth element is added to a host material of a phosphor containing oxygen.

4. The metal back-attached phosphor screen as set forth in claim 2, wherein the oxygen carrier is the one in which an activator of a rare-earth element is added to a host material of a phosphor containing oxygen.

5. The metal back-attached phosphor screen as set forth in claim 3, wherein a concentration of the activator is from 0.0001 to 10 mol% in the oxygen carrier.

6. The metal back-attached phosphor screen as set forth in claim 4, wherein a concentration of the activator is from 0.0001 to 10 mol% in the oxygen carrier.

7. An image display device, comprising:
a face plate;
a rear plate disposed to face the face plate;
numerous electron emitting elements formed on the rear plate; and
a phosphor screen formed on the face plate in such a way as to face the rear plate, and emitting light by electron beams emitted from the electron emitting elements, wherein the phosphor screen is a metal back-attached phosphor screen as set forth in any one of claims 1 to 6.
